**Europäisches Patentamt**

**European Patent Office**

**Office européen des brevets**

(19)

(11) Veröffentlichungsnummer: **0 178 547**
**B1**

(12) # EUROPÄISCHE PATENTSCHRIFT

(45) Veröffentlichungstag der Patentschrift:
20.07.88

(51) Int. Cl.⁴: **H 04 N 1/40**

(21) Anmeldenummer: **85112544.3**

(22) Anmeldetag: **03.10.85**

(54) **Verfahren zur Darstellung eines Halbtonbildes unter Verwendung eines detektionsangepassten Rasters.**

(30) Priorität: **09.10.84 DE 3437063**

(43) Veröffentlichungstag der Anmeldung:
**23.04.86 Patentblatt 86/17**

(45) Bekanntmachung des Hinweises auf die Patenterteilung:
**20.07.88 Patentblatt 88/29**

(84) Benannte Vertragsstaaten:
**CH DE FR GB IT LI NL SE**

(56) Entgegenhaltungen:
**EP-A-0 027 967**
**DE-A-2 307 374**

**IEEE INTERNATIONAL CONFERENCE ON
COMMUNICATIONS, 11.-13. Juni 1973, Seattle,
Washington, Seiten 26-11 - 26-15, IEEE, New York,
US; B.E. BAYER: "An optimum method for two-
level rendition of continuous-tone pictures"
IEEE INTERNATIONAL CONFERENCE ON
COMMUNICATIONS, Band 1/3, 19.-22. Juni 1983,
Boston, Massachussets, Seiten 448-452, IEEE, New
York, US; F. ONO et al.: "A new rule for minimizing
unwanted texture in tow-level rendition of
continuous-tone pictures"**

(73) Patentinhaber: **Siemens Aktiengesellschaft Berlin
und München, Wittelsbacherplatz 2, D-8000
München 2 (DE)**

(72) Erfinder: **Koch, Klaus, Dr.- Ing., Zentnerstrasse 23,
D-8000 München 40 (DE)**

EP 0 178 547 B1

**0 178 547**

## Beschreibung

Die Erfindung betrifft ein Verfahren zum Darstellen eines Halbtonbildes gemäß dem Oberbegriff des Patentanspruches 1.

Viele der in der elektronischen Datenverarbeitung eingesetzten Wiedergabegeräte gehören zur Gruppe der digitalen Displays. Deren einzelne Wiedergabeelemente können zwei Zustände annehmen, z. B an-aus, hell-dunkel, reflektieren-absorbierend. Solche Geräte sind: AG-Plasma-Schirme, LCD-Anzeigen, Rasterdrucker usw. Zur Wiedergabe von Zeichnungen und alphanumerischen Zeichen eignen sich digitale Displays in besonderem Maße. Komplizierter ist es Halbtonbilder wiederzugeben, da alle Wiedergabeelemente die gleiche Größe haben. So bleibt als Möglichkeit Halbtöne wiederzugeben die Variation der Anordnung und Anzahl der Elemente in den zwei Zuständen. Diese Art Helligkeitsabstufung zu erzeugen, bezeichnet man als Pseudo-Halbtonverfahren.

Ein derartiges Pseudo-Halbtonverfahren zum Darstellen eines Halbtonbildes, wird z.B. in der DE-PS-29 43 018 beschrieben.

Beim Pseudo-Halbtonverfahren muß für jedes Wiedergabeelement eine Entscheidung über seinen Zustand getroffen werden. Das geschieht durch einen Vergleich zwischen der Intensität des wiederzugebenden Bildpunktes und einem Schwellenwert. Ist die Intensität größer als der Schwellenwert, nimmt das Wiedergabeelement den hellen Zustand ein, ansonsten den dunkeln. Je nachdem wie der Schwellenwert festgelegt wird unterscheidet man zwischen adaptiven und nichtadaptiven Algorithmen.

Bei nichtadaptiven Algorithmen liegt der Schwellenwert eines Wiedergabeelementes als Funktion seiner Lage fest und ist unabhängig vom wiederzugebenden Bild oder den bereits entschiedenen Zuständen anderer Wiedergabeelemete. Die Schwellenwerte mehrerer Wiedergabeelemente lassen sich zu einer Matrix zusammenfassen, die, sich periodisch wiederholend, die gesamte Zeichenfläche bedeckt. Als Raster mit nichtadaptiven Algorithmen sind dabei bekannt: Ordered Dither-Raster, Singele Thresholding, Digital Halftone und stochastische Raster.

Adaptive Verfahren ziehen zur Ermittlung der Schwellenwerte mehrere Bildpunkte und bereits gefällte hell-dunkel Entscheidungen heran. Methoden dieser Art sind Constrained-Average, Overflow Counting, Error Diffusion und Dynamic Thresholding.

Adaptive Algorithmen erfordern einen wesentlich größeren Hardware-Aufwand, weil die Helligkeitswerte der Bildpunkte und die getroffene Entscheidung in der Umgebung des gerade betrachtenden Wiedergabeelementes zur Verfügung stehen müssen. Die Ermittlung der Schwellenwerte aus diesen Daten bringt wiederum einen beträchtlichen Verarbeitungs- und Zeitaufwand mit sich. Die nichtadaptiven Algorithmen sind also schneller und paralleler Betrieb (gleichzeitige Bearbeitung mehrerer Zeilen) ist möglich. So genügen im Prinzip einfache Hardware-Schaltungen, um den Vergleich zwischen der wiederzugebenden Helligkeit und dem Schwellenwert durchzuführen.

Vergleicht man Reproduktionen nach adaptiven und nichtadaptiven Algorithmen, so lassen sich zwischen ihnen einige wesentliche Unterschiede feststellen. Weil bei adaptiven Algorithmen die Vorgeschichte in die Festlegung der Schwellenwerte eingeht, wird das gleiche Detail je nach Umgebung einmal besser, einmal schlechter wiedergegeben. Über regelmäßige Texturen ist der Betrachter eher geneigt hinwegzusehen. Diese bilden sich aber bei adaptiven Algorithmen im allgemeinen nicht aus, sondern wechseln. Bei der Farbwiedergabe macht es sich störend bemerkbar, daß sich die Farbauszüge nicht überall decken. So fallen Farbpunkte, die zusammen eine Mischfarbe erzeugen sollen, manchmal übereinander, manchmal nebeneinander. Nur wenn die einzelnen Farbpunkte nicht wahrgenommen werden, die Textur also unterschwellig ist, ist eine Wiedergabe mit adaptiven und nichtadaptiven Algorithmen gleichwertig, soweit die subtraktive Farbmischung auf dem Papier tatsächlich linear erfolgt. Erreicht die Textur aber die Schwelle oder überschreitet sie, entsteht eine zusätzliche Unruhe, die auch in im Original einheitlichen Gebieten bei der Wiedergabe oder Kopie einen griesigen, rauhen Eindruck hervorruft. Andererseits sind bei adaptiven Algorithmen die durch die Digitalisierung hervorgerufenen Abweichungen von der wiederzugebenden Helligkeit auf engem Raum kleiner, und die Flankensteilheit an hell-dunkel Übergängen läßt sich regulieren.

Betrachtet man eine Wiedergabe mit adaptivem Algorithmus aus einer Entfernung, aus der die Textur über der Wahrnehmungschwelle liegt, gibt es einzelne besonders schöne Bereiche. Obwohl man die Textur deutlich erkennt, hat sie an diesen Stellen für verschiedene Helligkeitswerte etwa gleiche Wellenlänge und Intensität und die Überlagerung von Farben bildet keine Moiré-Muster.

Bei der Unterscheidung von Rastern mit gleichgroßen und gleichförmigen Wiedergabeelementen hat der Begriff der Vorzugsrichtung weitreichende Bedeutung. Vorzugsrichtungen sind diejenigen Richtungen, in denen benachbarte, gleichweit voneinander entfernte Wiedergabeelemente angeordnet sind.

Die Frage nach der möglichen Anzahl der Vorzugsrichtungen läßt sich auf die Frage zurückführen, welche regelmäßigen Polygone die Ebene vollständig bedecken. Von der Geometrie her ist bekannt, daß nur das gleichseitige Dreieck, das Quadrat und das regelmäßige Sechseck diese Bedingung erfüllen. Das Quadrat hat vier gleichweit entfernte Nachbarn, so daß sich zwei zueinander senkrechte Vorzugsrichtungen ergeben. Dreieck und Sechseck sind hinsichtlich der Vorzugsrichtung gleichwertig, weil sich das Sechseck aus gleichseitigen Dreiecken aufbaut. Aus den sechs Nachbarn resultieren drei Vorzugsrichtungen, die einen Winkel von 120°C zueinander einschließen, wie dies z. B. in der DE-PS-29 43 018 näher beschrieben wird.

Man nennt Raster mit zwei Vorzugsrichtungen auch quadratische Raster und solche mit drei Vorzugsrichtungen hexagonale Raster.

Mehr als drei Vorzugsrichtungen sind durch die Anordnung der Wiedergabeelemente nicht möglich. Bei nichtadaptive Algorithmen faßt man zur Erzeugung von Helligkeitsabstufungen mehrere Wiedergabeelemente zu einer immer wiederkehrenden, das Zeichenfeld bedeckenden, Struktur, dem Bildfleck zusammen. Schließt man in die Definition der Vorzugsrichtungen die Richtungen benachbarter Bildflecke ein, so können bei quadratischen Rastern 2, 4 oder 5 bei hexagonalen Rastern 3, 4, 5 oder 6 Vorzugsrichtungen auftreten. Diese Möglichkeit, mehr als zwei oder drei Vorzugsrichtungen zu schaffen, besteht bei den heute in der Drucktechnik fast ausschließlich angewendeten Rastern mit variabler Punktgröße nicht. Lediglich beim Farbdruck kann man die Raster für die einzelnen Druckfarben gegeneinander verdrehen, um neue Vorzugsrichtungen zu schaffen.

Die Qualität einer Reproduktion wird umso besser, je kleiner die Wiedergabeelemente gewählt werden. Gleichzeitig wachsen jedoch der Hardware-Aufwand und die Zeit, die für die Wiedergabe notwendig sind. Zudem stößt man je nach Verfahren an physikalische Grenzen, die eine Mindestgröße der Wiedergabeelemente bedingen. Ein Raster, das zu einer Verbesserung der Wiedergabequalität um einige 10 % bei gleicher Größe der Wiedergabeelemente führen würde, hätte also beachtliche Vorteile. An ein Raster, mit dem nachdem Pseudo-Halbtonverfahren Bilder erzeugt werden sollen, sind mehrere Forderungen zu stellen:

Es soll in der Lage sein, feine Details wiederzugeben. Die Größe der Wiedergabeelemente legt hierbei die absoluten Grenzen fest. In diesem Rahmen sind jedoch durch die Anordnung der Wiedergabeelemente und die Verteilung der Schwellenwerte innerhalb des Bildflecks unterschiedliche Resultate erreichbar.

Im engen Zusammenhang mit der Detailwiedergabe steht die Fähigkeit Schwarz-Weiß-Übergänge scharf zu reproduzieren und Ausfransungen zu vermeiden. Die Kantenschärfe ist vor allem bei Linien und Schrift von Wichtigkeit, weil hier zwei Übergänge dicht beieinander liegen.

Die Digitalisierung bedingt zwei weitere, miteinander verwandte Störungen, die darin bestehen, daß bei der Wiedergabe im Original nicht vorhandene Strukturen auftreten. Hier sind einmal Moiré-Muster zu nennen. Sie können entstehen, wenn die Freqenz einer regelmäßigen Vorlage in den Bereich der Frequenz der Wiedergabeelemente kommt.

Zum anderen bedingt die Erzeugung von Halbtönen durch Variation der Anzahl der Wiedergabeelemente in den beiden Zuständen die Bildung von Texturen innerhalb von Bereichen mit konstanter Helligkeit. Der gleichmäßige Eindruck eines solchen Bereiches entsteht also erst im Auge des Betrachters, wenn es nicht mehr in der Lage ist die einzelnen Elemente der Textur zu erkennen. Daraus folgt unmittelbar, daß die Art dieser Textur von erheblichem Einfluß auf die Wiedergabequalität eines Rasters ist, zumal sie ebenfalls auf die vorhergenannten Beurteilungskriterien Einfluß hat. Ein Maß für die Wahrnehmbarkeit von Texturen innerhalb der Graustufen eines Graukeiles, sind die Abstände, aus denen sie den Beobachter gleichmäßig und einheitlich erscheinen und die Texturen verschwimmen. Diese Entfernungen werden deshalb im folgenden als Verschwimmabstände bezeichnet.

Aufgabe der Erfindung ist es, ein Verfahren der eingangs genannten Art so auszugestalten, daß ein Halbtonbild hoher Wiedergabequalität bei größtmöglicher Bildpunktgröße und minimalstem Verschwimmabstand dargestellt werden kann.

Diese Aufgabe wird bei einem Verfahren der eingangs genannten Art gemäß dem kennzeichnenden Teil des ersten Patentanspruches gelöst. Vorteilhafte Ausführunsformen der Erfindung sind in den Unteransprüchen gekennzeichnet.

Dadurch, daß das Raster erfindungsgemäß so aufgebaut ist, daß es sich an einer ermittelnden Detektionsgrenze zur Wahrnehmbarkeit von Sinus-Gittern orientiert, läßt sich mit dem Raster ein Graukeil erzeugen, der gleichmäßige Übergänge ohne eigenständige störende Strukturen wie Moiré-Muster aufweist.

Bei einer bevorzugten Ausführungsform der Erfindung wird ein derartiges detektionsangepaßtes Raster dadurch erzeugt, daß man die Fläche des Bildfleckes in mindestens drei gleichgroße Teilbildflecke zerlegt und dann in den so entstandenen gleichgroßen Teilbildflecken die Bildpunkte direkt benachbart als Bildpunkthaufen setzt.

Das Optimum an Wiedergabequalität stellt bei quadratischer Punktanordnung ein Raster dar, dessen Bildfleck sich aus Teilbildflecken zusammensetzt und bei dem die Teilbildflecken gegeneinander versetzt sind, so daß ein hexagonal-ähnlicher Eindruck erzeugt wird.

Ausführungsformen der Erfindung sind in den Zeichnungen dargestellt und werden im folgenden anhand der einzelnen Figuren näher erläutert. Es zeigen

Fig. 1 eine schematische Darstellung der Detektionsgrenze für stationäre Sinusgitter,

Fig. 2 eine schematische Darstellung des Bildfleckes und der Punktanordnung der ersten fünf Stufen für ein 17-stufiges Ordered-Dither-Raster,

Fig. 3 eine schematische Darstellung des Bildfleckes und der Punktanordnung der ersten fünf Stufen für ein 17-stufiges Digital-Halftone-Raster,

Fig. 4 eine schematische Darstellung des Bildfleckes und der Punktanordnung der ersten fünf Stufen für ein 20-stufiges hexagonales Raster,

Fig. 5 eine schematische Darstellung der Transformationsmatrix der Stufe 2 des Ordered-Dither-Rasters,

Fig. 6 eine schematische Darstellung des Spektrum der Stufe 1 eines 17-stufigen Graukeils mit quadratischem Raster,

Fig. 7 und 8 eine schematische Darstellung der Überlappung der Punkte bei quadratischen und hexagonalen Rastern,

Fig. 9 eine schematische Darstellung der Reihenfolge, in der die Punkte der ersten Stufen eines Rasters mit Teilbildflecken gesetzt werden,

Fig. 10 eine schematische Darstellung der maßgeblichen Spektralkomponenten der 32. Stufe des Rasters mit Halbbildflecken der Fig. 7,

Fig. 11 eine schematische Darstellung der Anordnung des Schwellenwerte im Bildfleck eines 22-stufigen, hexagonalen Rasters mit Teilbildflecken,

Fig. 12 eine schematische Darstellung des Punktmusters der ersten Stufen eines 22-stufigen, hexagonalen Rasters mit Teilbildflecken, nach Fig. 11,

Fig. 13 eine schematische Darstellung der Erzeugung eines hexagonal ähnlichen Rasters bei quadratischer Punktanordnung durch Versatz der Bildflecke,

Fig. 14 eine schematische Darstellung der Stufe 1 eines 37-stufigen, quadratischen Rasters mit Detektionsanpassung,

Fig. 15 eine schematische Darstellung eines 65-stufigen Graukeils mit einem Raster mit Detektionsanpassung,

Fig. 16 eine schematische Darstellung des prinzipiellen Aufbaus eines Farbkopierers und

Fig. 17 ein Blockschaltbild einer Meßanordnung zur Ermittlung eines detektionsangepaßten Musters.

Zur Erklärung der Wahrnehmung von Rastern und Texturen durch das visuelle System des Menschen kommt der Modulationsübertragungsfunktion eine wesentliche Bedeutung zu.

Eine Möglichkeit sie zu bestimmen ist die Schwelle der Wahrnehmung, die sogenannte Detektionsgrenze von Sinusgittern zu messen. Während bei Systemen der technischen Optik zur Bestimmung der Modulationsübertragungsfunktion die Abschwächung eines konstanten Eingangssignals in Abhängigkeit von dessen Frequenz gemessen wird, verändert man zur Bestimmung der Detektionsgrenze die Modulation des Eingangssignales, um ein konstantes Ausgangssignal, das die Detektionsschwelle erreicht, zu erhalten.

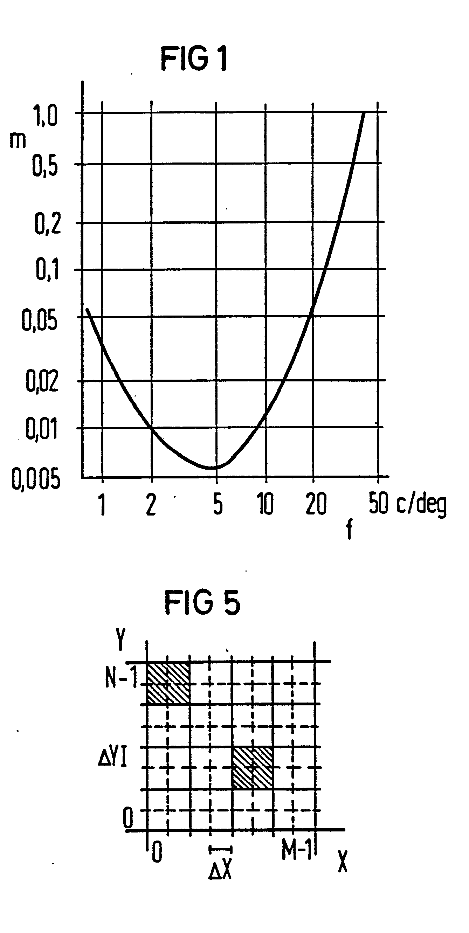

Die Fig. 1 zeigt dabei den Verlauf der Detektionsgrenze für stationäre Sinusgitter. Auf der Ordinate ist dabei der Modulationsgrad M eingetragen, auf der Abszisse die Ortsfrequenz in Cycles/-Degree. Sinusgitter die mit ihrer Frequenz und Modulation oberhalb der Detektionsgrenze liegen sind wahrnehmbar. Die Helligkeitsverteilung der Punktemuster von Graustufen ist eine zweiwertige Ortsfunktion der Koordinaten x und y. Unterzieht man diese Funktion einer Fouriertransformation, so wird sie durch Sinus- und Cosinuskomponenten, dem Spektrum, angenähert. Ein Maß für die Wahrnehmbarkeit von Texturen innerhalb der Graustufen eines Halbtonbildes sind die Abstände aus denen sie dem Beobachter gleichmäßig und einheitlich erscheinen und die Texturen verschwimmen. Die Entfernungen werden als Verschwimmabstände bezeichnet. Zur Bestimmung dieser Verschwimmabstände und damit für die Beurteilung der Qualität von Rastern sind die Spektren der Graustufen und die Detektionsgrenze die wichtigsten Hilfsmittel.

Will man z. B. feststellen, ob ein bestimmtes Raster hinsichtlich seiner Textur wahrnehmbar ist oder nicht, so ermittelt man für jede Helligkeitsstufe das Spektrum und vergleicht es im entsprechenden Maßstab mit der Detektionsgrenze. Im einfachsten Falle trägt man das Spektrum zusammen mit der Detektionsgrenze in ein Diagramm ein.

Ragen nun einzelne Komponenten der Spektren in den Bereich oberhalb der Detektionsgrenze, so ist die Textur wahrnehmbar.

Eine Möglichkeit zur Feststellung des Spektrums eines Rasters sei nun im folgenden anhand eines quadratischen Rasters, nämlich des sogenannten Ordered-Dither-Rasters, näher beschrieben.

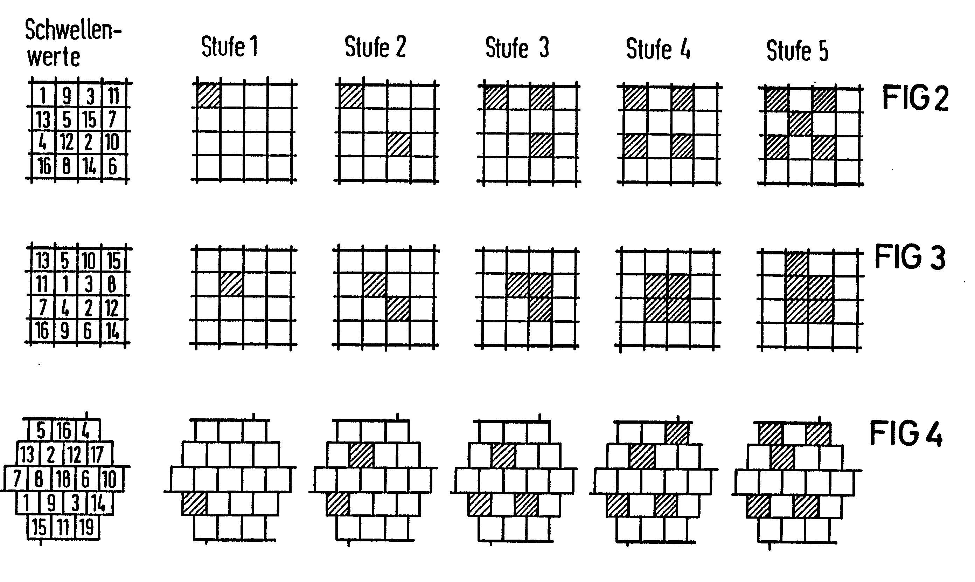

Bei einem Ordered-Dither-Raster sind die Punkte einer Graustufe so gleichmäßig wie möglich über den Bildfleck verteilt. Durch diese Verteilung erreicht man, daß die Grundschwingung der geraden Stufen bei höheren Frequenzen liegt. Für Ordered-Dither-Raster ist Voraussetzung, daß die Seitenlänge ihre Bildflecke Potenzen von Zwei sind. Mit dieser Einschränkung sind nur gewisse Stufenzahlen der bei quadratischen Rastern möglichen mit Ordered-Dither-Raster zu realisieren. Bei dem in der Fig. 2 dargestellten Ordered-Dither-Raster handelt es sich um ein Raster bei dem der Bildfleck sich aus 16 Punkten zusammensetzt, so daß er zusammen mit Weiß 17 Helligkeitsstufen umfaßt. Die Schwellenwerte des Rasters sind dabei im ersten Diagramm der Fig. 2 numerisch dargestellt. Die folgenden Diagramme der Fig. 2 bezeichnen die ersten fünf Helligkeitsstufen des Bildfleckes.

Die Punktmuster (hell-dunkel-Muster) der Graustufen sind aufgrund des Rasteraufbaues (Fig. 2) in beiden Dimensionen periodisch. Daraus resultiert ein diskretes Spektrum. Weiterhin ist eine Diskretisierung im Ortsraum nötig, um die Helligskeitsfunktion in einen Rechner eingeben zu können. Diese Diskretisierung führt zu einer periodischen Fortsetzung des Spektrums. Da sowohl die Helligkeitsfunktion im Ortsraum, als auch das Spektrum durch diskrete Abtastwerte gegeben sind, liegt eine finite Signaldarstellung vor. Das Spektrum von finiten Signalen erhält man mittels der diskreten Fouriertransformation (DFT). Deren Transformationsgleichung lautet im zweidimensionalen Fall:

$$F(\mu, \gamma) = (M.N)^{-1} \sum_{\sigma=0}^{M-1} \sum_{\tau=0}^{N-1} (-1)^{\sigma+\tau} f(\sigma, \tau) \exp[+2\pi (\tfrac{\mu\sigma}{M} + \tfrac{\gamma\tau}{N})]$$

Die Funktion $f(\sigma, \tau)$ verkörpert die Helligkeit des jeweiligen Abtastwertes. Idealisierend wird dabei die Funktion $f(\sigma, \tau) = 0$ für Weiß und $f(\sigma, \tau) = 1$ für Schwarz stehen, so daß $f(\sigma, \tau)$ in etwa dem Absoptionsgrad entspricht. Die Gesamtzahl der Abtastwerte pro Periode in x-Richtung beträgt M, in y-Richtung N. Die Summationsvariablen $\sigma$ und $\tau$ ergeben sich aus den folgenden Gleichungen, wobei $\Delta X$ und $\Delta Y$ die Abtastintervalle sind.

4

$$\sigma = \text{int} \left(\tfrac{X}{\Delta X}\right); \qquad \tau = \text{int} \left(\tfrac{X}{\Delta Y}\right)$$

Für die Koordinaten im Frequenzraum gilt Gleichung:

$$\mu = \text{int} \left(\tfrac{f_x}{\Delta f_x}\right); \qquad \gamma = \text{int} \left(\tfrac{f_x}{\Delta f_y}\right)$$

$\Delta f_x$ und $\Delta f_y$ stellen die spektralen Abtastintervalle dar, die über folgende Gleichungen mit $\Delta X$ und $\Delta Y$ in Beziehung stehen.

$$\Delta f_x \cdot \Delta X \cdot M = 1; \quad \Delta f_y \cdot \Delta Y \cdot N = 1$$

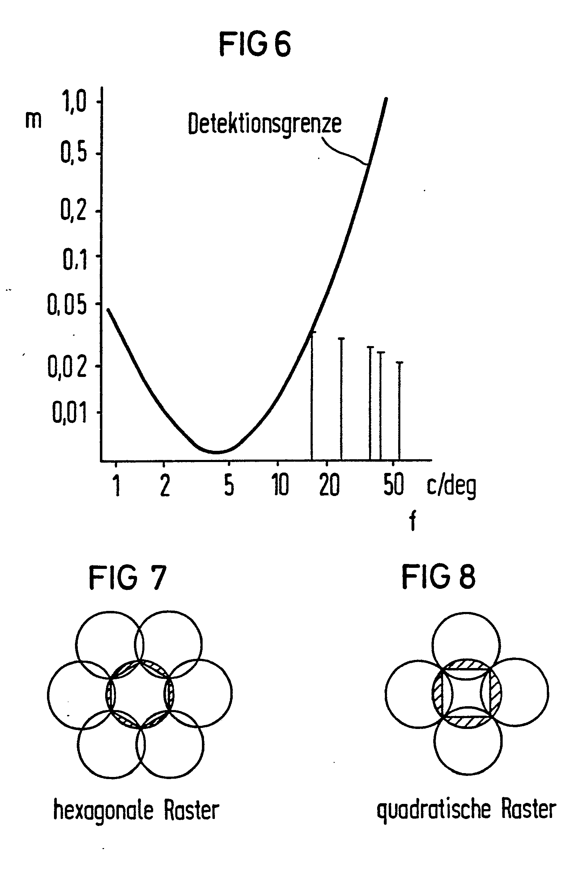

Der Faktor $(-1)^{\sigma+\tau}$ stellt allein einen Normierungsfaktor dar, um z. B. wie in diesem Fall, den Ursprung der Frequenzebene in die Mitte der Matrix, die das berechnete Spektrum enthält, zu legen. Bei der Anwendung der Transformation auf das beschriebene Ordered-Dither-Raster können einige vereinfachende Vereinbarungen getroffen werden. Um einerseits die mit der Diskretisierung verbundene Verletzung des Abtasttheorms zu verkleinern und andererseits beim eigentlichen Rechenvorgang die Rechenzeiten in vertretbaren Größen zu halten, wählt man die Abtastintervalle $\Delta X$ und $\Delta Y$ so groß, daß jedes Wiedergabeelement von vier Abtastwerten erfaßt wird. Wie sich bei der Auswertung der Spektren zeigen wird, spielt nur die Komponente mit der niedrigsten Frequenz eine Rolle, was durch die große Steigung der Detektionsgrenze im höherfrequenten Bereich bedingt ist. Bei dieser machen sich aber Störungen durch die gewählte Quantisierung kaum bemerkbar. M und N müssen nun so bestimmt werden, daß die dadurch festgelegten Periodenlängen mit denen des Hell-Dunkel-Musters übereinstimmen. Bei dem beschriebenen quadratischen Rastern bereitet es keinerlei Schwierigkeit, wenn man die x- und y- Richtung mit den Vorzugsrichtungen zusammenfallen läßt. In der Fig. 5 ist als Beispiel die zu transformierende Matrix der zweiten Helligkeitsstufe eines 17-stufigen Ordered-Dither-Rasters dargestellt.

Die beschriebenen Gleichungen sind die Fourier-Komponenten in komplexer Form. Vor denen ist lediglich der Betrag von Bedeutung, da das Auge nur Leistungen wahrnehmen kann.

Hat man dann auf die beschriebene Weise das Spektrum des Raster ermittelt, so kann man dieses Spektrum nach entsprechender Normierung zusammen mit der Detektionsgrenze in ein Diagramm entsprechend der Fig. 6 darstellen. Bei dem dargestellten Diagramm der Fig. 6 handelt es sich um die Darstellung des Spektrums der ersten Stufe eines 17-stufigen Graukeils mit quadratischem Raster (Ordered-Dither-Raster). Der Verschwimmabstand ist dann erreicht, wenn der Betrachtungsabstand so gewählt wurde, daß die störenste Komponente des Spektrums die Detektionsgrenze berührt. Eine Veränderung des Betrachtungsabstandes bewirkt damit eine Verschiebung der Spektren in Abszissenrichtung. Ein Maß für die Güte eines Halbtonbildes bildet also die Größe des Verschwimmungsabstandes.

Damit ergibt sich die Möglichkeit des Aufbaues eines detektionsangepaßten Rasters zum Erzielen eines Halbtonbildes hoher Güte. Zu diesem Zwecke variiert man bei einem eingestellten Verschwimmabstand der Stufe des Rasters mit nur einem Bildpunkt und vorgegebener Bildpunktgröße, den Aufbau des Rasters solange, bis die Amplituden der einzelnen Komponenten des Ortsfrequenzspektrums sämtlicher Helligkeitsstufen des gewählten Rasters die Detektionsgrenze nicht mehr überschreitet. Die Komponente der Helligkeitsstufe mit nur einem Bildpunkt berührt dabei gerade die Detektionsgrenze.

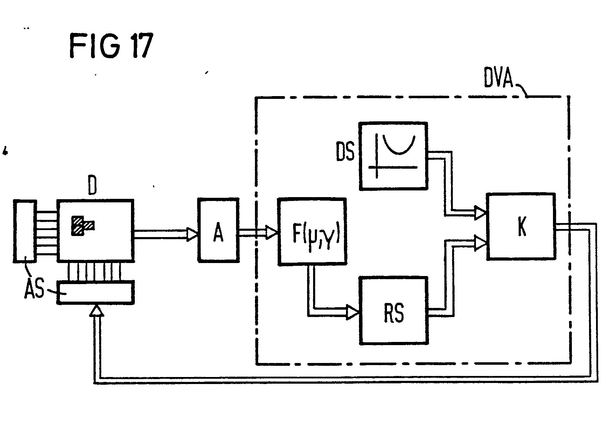

Eine Meßanordnung zur Ermittelung eines Detektionsangepaßten Musters ist z. B. in der Fig. 17 dargestellt:

Auf einem Display D das z. B. LCD-Display sein kann, wird mit Hilfe einer üblichen Ansteuereinrichtung AS, z. B. ein 17-stufiges Ordered-Dither-Rasters entsprechend der Fig. 2 hintereinander mit den verschiedenen Helligkeitsstufen 1 bis 17 dargestellt. Diese Muster werden nun über eine Abtasteinrichtung A abgetastet bzw. die bereits von der Ansteuerschaltung AS gelieferten Ansteuersignale der Abtasteinrichtung A zugeführt und in einer programmgesteuerten Recheneinheit DVA die z. B. aus drei 8-Bit-Einplatinencomputern AMC-SKC85 (8085 Prozessor) besteht, verarbeitet. Diese Recheneinheit DVA führt eine zweidimensionale Fouriertransformation $F(\mu, \gamma)$ zur Ermittlung des Frequenzspektrums durch wie dies z. B. in den Literaturstellen: (Kelly, D.H.; Magnuski, H.S.: Pattern detection and the two dimensional Fouriertransform: circular targets. Vision Research, Vol. 15 (1975), S. 911-915); (Kermish, D.; Roetling, P.G.: Fourier spectrum of halftone images. Jour. Opt. Soc. Am , Vol. 65 (1976) S.716-723); (Bracewell, R.: The Fouriertransform and its application. 2. Auflage, McGraw - Hill, 1978) beschrieben wird.

Nach einer entsprechenden Normierung werden die Spektren der Raster in einem Rasterspeicher RS der Recheneinheit DVA diskret abgelegt. Dann erfolgt über einen hier nur symbolisch dargestellten Komparator K, der wiederum Teil der DVA ist und im Prinzip nur einen Rechenschritt innerhalb der DVA darstellt, ein Vergleich dieser im Raster-Speicher RS abgespeicherten Spektren (Amplituden der Spektrallinien) mit der in einem weiteren Speicher DS abgespeicherten Detektionsgrenze (Fig. 6). Überschreitet eine Spektrallinie der Spektren der Raster die Detektionsgrenze so wird über die Ansteuereinrichtung AS der Aufbau des Rasters solange variiert bis entsprechend der Fig. 6 die Amplituden der einzelnen Komponenten des Ortsfrequenzspektrums sämtliche Helligkeitsstufen des gewählten Rasters die Detektionsgrenze nicht mehr überschreitet. Wird dies für sämtliche Helligkeitsstufen des gewählten Rasters erreicht, so ist das Raster optimal angepaßt und in diesem Falle berührt die stärkste Spektralkomponente der Helligkeitsstufe mit nur einem Bildpunkt gerade die Detektionsgrenze (Fig. 6).

Untersucht man nun unter Berücksichtigung des vorstehend beschriebenen Verfahrens die Eignung verschiedener bekannter Raster für die Wiedergabe mit Rasterdruckgeräten und dabei insbesondere ihre Eignung für digitale Displays und damit auch für Rasterdrucker, so zeigt sich, daß das Ordered-Dither-Raster starke Schwankungen der Verschwimmabstände aufweist, je nachdem ob der Bildfleck einer Stufe eine gerade oder ungerade Anzahl von Punkten hat. Die Ursache liegt im wesentlichen darin, daß der Bildfleck bei den geraden Stufen in gleichartige Untereinheiten aufteilbar ist, wodurch sich die größte auftretende Wellenlänge (= Seitenlänge) der Bildflecken reduziert. Die ersten Komponenten des Spektrums treten also erst bei höheren und daher schwerer wahrzunehmenden Frequenzen auf. Bei der Wiedergabe sanfter Helligkeitsübergänge machen sich die Schwankungen dahingehend bemerkbar, daß die Grenze zwischen zwei aufeinanderfolgenden Helligkeitsstufen deutlich wahrnehmbar ist (Contouring). Digital-Halftone (Fig. 3) hat von allen Rastern die größten Verschwimmabstände. Die Unterschiede betragen im mittleren Bereich etwa 20 %. Digital-Halftone wurde für einen Fall sich überlappender Elemente vorgeschlagen, weil das Hineinreichen in freizubleibende Bereich durch die Anordnung zur Punkthaufen reduziert und so die Helligkeitsabstufung der Graukeile linearer wird. Wie Meßergebnisse gezeigt haben, macht die grobe Textur diesen Vorteil jedoch zunichte. Zudem verschlechtert sich durch das Bestreben Punkthaufen zu bilden die Fähigkeit der Detailwiedergabe.

Nach Messungen sind ein um 45° gedrehtes Ordered-Dither-Raster (Fig. 2) und das Hexagonal-Raster (Fig. 4) den beiden anderen bezüglich Gleichmäßigkeit und Größe der Verschwimmabstände überlegen. Der größeren Gleichmäßigkeit des Hexagonal-Rasters stehen die geringfügig kürzeren Verschwimmabstände des gedrehten Ordered-Dither gegenüber.

Vergleicht man nun unter Berücksichtigung von Frequenz und Amplitude die Verschwimmabstände der ersten Stufen so ergibt sich, daß der des hexagonalen Rasters um 8 % größer ist, bedingt durch die höhere Stufenzahl. Von den genannten Gesichtpunkten her, ist das hexagonale Raster also vorzuziehen.

Beim Tintendruck werden Tröpfchen auf das Papier geschossen, die Kleckse hinterlassen. Daher sind die Wiedergabeelemente kreisförmig und müssen sich überlappen, um flächendeckend zu sein. Dasselbe gilt für Nadeldrucker und Laserprinter. Aufgrund der Punktanordnung ist diese Überlappung bei den zwei Grundtypen von Rastern unterschiedlich hoch. Die Fig. 7 stellt dabei die Überlappung der Punkte der hexagonalen Rastern und die Fig. 8 die Überlappung der Punkte bei quadratischen Rastern dar.

Bei hexagonalen Rastern tragen 83 % der Punktfläche dazu bei, die vom idealen Wiedergabeelement vorgegebene Fläche zu bedecken. Bei quadratischen Rastern sind es nur 64 %. Die restliche Punktfläche bedingt die Überlappung. Diese größere Überlappung bei zwei Vorzugsrichtungen bringt einige Nachteile mit sich:

Zunächst sind mehr Punkte zur Bedeckung des Zeichenfeldes notwendig. Neben erhöhten Tintenverbrauch können vor allem bei Mehrfarbendruck eher Probleme durch Aufweichen des Papier auftreten.

Graukeile von hexagonalen Rastern weisen eine gleichmäßige Helligkeitsabstufung auf. Die Ursache für die Nichtlinearität ist, daß der überlappende Teil der Punktfläche in Gebiete reicht, die eigentlich von Nachbarpunkten zu bedecken wäre. Der freibleibende Raum sinkt daher bei quadratischen Rastern stärker in Abhängigkeit der Anzahl der Nachbarn. Weiterhin ist die Empfindlichkeit gegenüber Schwankungen des Punktdurchmessers größer. Als Beispiel sei angenommen, daß der Punktdurchmesser um 10 % vergrößert ist. Die bedeckende Fläche eines Punktes mit größtmöglicher Anzahl an Nachbarn sinkt bei quadratischen Rastern um 48 % bei hexagonalen um 27 %.

Die in der Druckindustrie verwendeten Raster zur Bilderzeugung haben im allgemeinen zwei Vorzugsrichtungen. Daher treten bei der Wiedergabe solcher Vorlagen mit Tintendruckern leicht Moiré-Effekte auf, wenn beim Tintendruck ebenfalls ein quadratisches Raster verwendet wird. Besonders kritische Verhältnisse liegen vor, wenn das Verhältnis von Rasterweite (Vorlage) zum minimalen Punktabstand (Tintendruck) zwischen 1 und 2 liegt. Verwendet der Tintendrucker ein hexagonales Raster, werden die Moiré-Muster in kleinere Bestandteile aufgebrochen und wirken sich weniger störend aus.

Wie bereits erwähnt wurde das Digital-Halftone-Raster konzipiert, um die Einflüsse der Punktüberlappung einzuschränken. Es besteht nun eine Möglichkeit, die damit verbundene Erzeugung von leicht wahrnehmbarer Textur zu umgehen.

Für die hellen Stufen eines Keiles benutzt man die des Ordered-Dither-Rasters, bis man bei einer Stufe angelangt ist, deren Punktzahl im Bildfleck eine Potenz von Zwei ist. In diesem Falle zerfällt der Bildfleck in gleichgroße Untereinheiten. Nun fährt man fort in diesem Teilbildfleck die Bildpunkte dem Digital-Halftone-Raster entsprechend zu setzen. Durch die Bildung von Punkthaufen wächst jetzt nicht der Amplitudenbetrag der Grundschwingung, sondern diejenige Komponente, deren Frequenz sich aus der Seitenlänge des Teilbildfleckes ergibt. Dieser Frequenz ist wegen der kürzeren Seitenlänge größer als die Grundfrequenz und zwar um den Faktor Wurzel aus der Helligkeitsstufe, bei der die Umschaltung von Ordered-Dither auf Digital-Halftone erfolgte. Die höhere Frequenz gestattet einen größeren Amplitudenbetrag, ehe die Komponente die Detektionsgrenze überschreitet. Daher verschlechtern die Punkthaufen bei geeigneter Größe der Teilbildflecke die Wahrnehmung von Textur nicht.

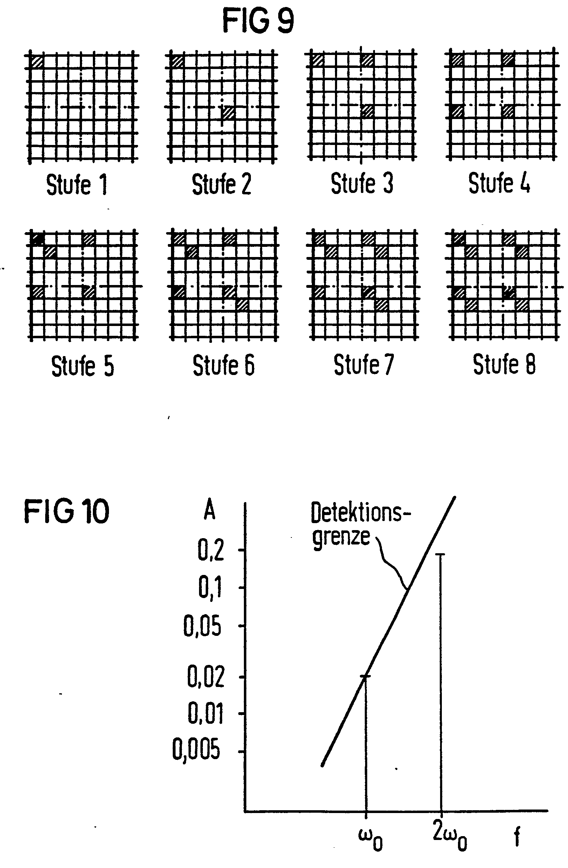

Die Fig. 9 zeigt als Beispiel die Reihenfolge, in der die Punkte der ersten Stufen eines Rasters mit Teilbildflekken gesetzt werden.

Der gesamte Bildfleck besteht aus 64 Punkten. Die ersten vier Stufen entsprechen dem zu diesem Bildfleck gehörenden Ordered-Dither-Raster. Damit erfolgt eine Aufteilung in vier 4 x 4 Punkte große Teilbildpunkte. Ab der nächsten Stufe werden die folgenden Punkte neben die bereits vorhandenen Punkte gesetzt. Die Amplitude der Grundschwingung ist 0.0153. Dieser Wert tritt bei allen ungeraden Stufen und bleibt für das gesamte Ordered-Dither-Raster gleich. Da die Umschaltung auf Digital-Halftone nach der vierten Stufe stattfindet, führen die Punkthäufungen ab Stufe 5 zu einem Anwachsen der Komponente mit der doppelten Frequenz der Grundschwingung.

Wegen der großen Steigung der Detektionsgrenze von 24 dB/-Oktave dürfen die Amplituden auf das 16-fache anwachsen, bevor sie die Detektionsgrenze erreichen. Der größte Amplitudenbetrag dieser Komponente tritt bei der mittleren Helligkeitßstufe (Stufe 32) mit 0.1826 auf, also dem 12-fachen des entsprechenden Wertes der Grundschwingung. Damit ist die maßgebliche Komponente für die Detektion immer noch unter der Detektionsgrenze (Fig. 10). Die Fig. 8 zeigt dabei die maßgeblichen Spektralkomponenten der 32. Stufe des Raster mit Teilbildflecken entsprechend den Raster der Fig. 9. Die Punktanhäufungen in den Teilbildflecken haben also nicht den gleichen Effekt zur Folge wie beim Digital-Halftone-Raster.

Auch bei hexagonalen Rastern kann man die Punkte nach der Methode der Teilbildflecke setzen, ohne daß damit die Wahrnehmung von Textur verschlechtert wird.

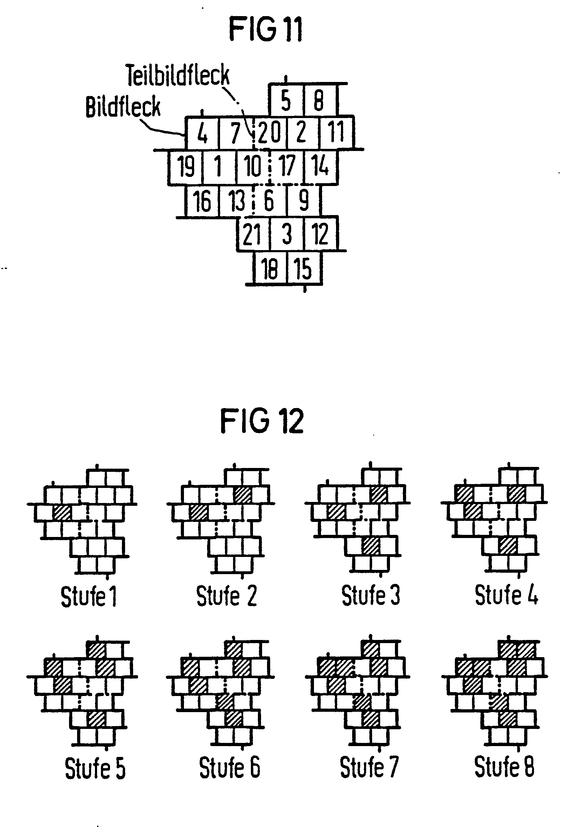

Fig. 11 zeigt den Bildfleck mit dem Schwellenwerten eines 22-stufigen hexagonalen Rasters und Fig. 12 die daraus abgeleiteten Punktmuster der ersten acht Stufen. Das Verhältnis der Grundfrequenz zu der zum Teilbildfleck gehörenden Frequenz gehört √3, woraus sich wiederum ein zulässiges Amplitudenverhältnis von 9 ergibt. Die Amplitudenbeträge erreichen diesen Wert nicht, so daß auch hier die Punktanhäufung die Detektion von Textur nicht beeinträchtigt und die hinsichtliche Überlappung günstigen Eigenschaften von hexagonalen Rastern nochmals verbessert werden.

Bei der Beurteilung von Tintendruckkopien aus einem Abstand, aus dem die einzelnen Punkte durchaus unterscheidbar sind, werden die mit hexagonalen Rastern im allgemeinen schöner und gefälliger eingestuft und die Textur als weniger störend empfunden. Ein Grund hierfür ist sicherlich die höhere Anzahl von Vorzugsrichtungen, die durch die Aneinanderreihung von Punkten und Bildflecken entstehen. Durch die Bildung von Teilbildflecken kommen nochmals drei Vorzugsrichtungen Zustande, wie aus der Fig. 12 zu entnehmen ist. Dadurch ist eine weitere Verbesserung bei der Beurteilung nach subjektiven Gesichtspunkten erzielbar.

Aus den Untersuchungen läßt sich der Schluß ziehen, daß von den Rastern zur Wiedergabe mit Rasterdruck, unabhängig davon ob sie mit Tintendruck, Nadeldruck oder auf andere Art erzeugt werden, hexagonale Raster, quadratischen überlegen sind.

Zuweilen ist jedoch eine hexagonale Punktanordnung nicht möglich, sei es aufgrund von gerätetechnischen Gegebenheiten (z. B. bei AC-Plasma-Schirmen) oder Normen und Richtlinien (z. B. CCITT-Faksimile-Code). Trotzdem ist auch bei einer Punktanordnung in Zeilen und Spalten eine angenäherte hexagonale Anordnung möglich, wenn man die Bildflecken in geeigneter Weise gegeneinander verschiebt.

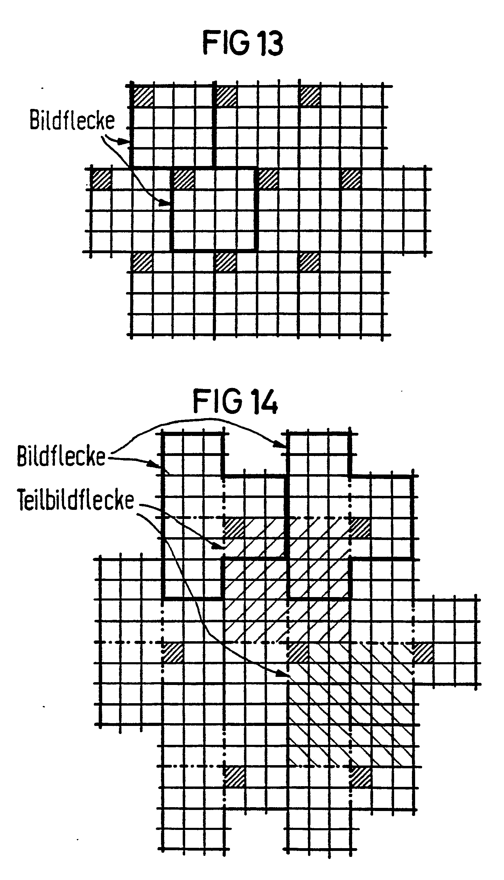

Fig. 13 zeigt die Erzeugung eines hexagonal ähnlichen Rasters bei quadratischer Punktanordnung durch Versatz der Bildflecke. Das dargestellte Diagramm stellt die Stufe 1 eines derartigen 17-stufigen Rasters dar. Wie zu erkennen ist, treten nun auch hier drei Vorzugsrichtungen auf. Wegen der größeren Punktabständen in den zur waagrechten geneigten Richtungen vermindern sich die entsprechenden Frequenzen um ca. 10 %. Dieser negative Effekt wird aber durch die Neigung kompensiert, weil sich sich der Amplitudenbetrag reduziert.

Das Optimum an Wiedergabequalität stellt bei quadratischer Punktanordnung ein Raster dar, dessen Bildfleck sich aus Teilbildflecken zusammensetzt und bei dem die Teilbildflecken gegeneinander um eine halbe Seitenlänge der Matrix versetzt sind. Auch die Bildflecke sind gegeneinander versetzt. Die Fig. 14 zeigt ein solches Raster mit Detektionsanpassung. Es handelt sich bei dem dargestellten Raster um die Stufe 1 eines 37-stufigen, quadratischen Rasters. Einige Bildflecke sind zur Verdeutlichung hervorgehoben (durchgezogener Strich), einige Teilbildflecke schraffiert dargestellt.

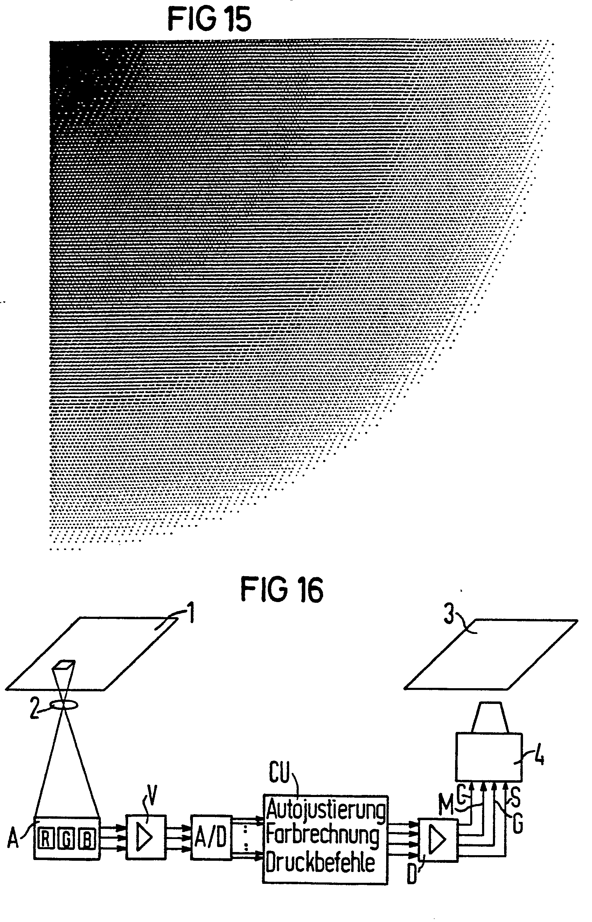

Erzeugt man mit einem derartigen detektionsangepaßten Raster einen Graukeil, so ergibt sich ein Verlauf der Helligkeitsstufen entsprechend der Fig. 15. Auch bei geringem Betrachtungsabstand ist der texturfreie Verlauf gut zu erkennen. Der in der Fig. 15 dargestellte Graukeil wurde mit Hilfe eines in der Fig. 16 schematisch dargestellten Farbkopierers erzeugt. Die Fig. 16 zeigt dabei den prinzipiellen Aufbau eines derartigen Farbkopierers.

Im linken Teil ist die Abtastung dargestellt, im rechten die Wiedergabe. Zwischen beiden befindet sich die Verarbeitungseinheit. Als Grundgerät dient ein Fernkopierer HF2050 der Firma Hell, der in der nachstehend beschriebenen Weise auf Farbdruck und Abtastung erweitert wurde. Aufgabe des Abtasters A ist es, die Farbzusammensetzung der Bildpunkte zu ermitteln. Zu diesem Zweck beleuchtet eine hier nicht dargestellte Halogenlampe mit Kaltlichtspiegel die Vorlage 1. Ein Objektiv bildet den wiederzugebenden Bildpunkt nacheinander auf drei Fotoelemente R,G,B, vor denen ein Rot-Grün- bzw. Blau-Filter sitzt. Jeder Filter sperrt die entsprechenden Komplementärfarbe. Daraus wird das Vorhandensein der subtraktiven Grundfarben ermittelt. Nach zweimaliger Verstärkung gelangen die Farbsignale zur Verarbeitungseinheit. Aus Vereinfachungsgründen wurde eine 1 : 1 Zuordnung zwischen Abtastwert und Wiedergabeelement gewählt.

Die Farbtöne der Kopie 3 entstehen durch subtraktive Farbmischung. Deshalb enthält der einen Tintenkopf enthaltende Wiedergabedrucker 4, der synchron mit dem Abtaster zeilenweise bewegt wird, hier nicht dargestellte Farbbehälter mit den lasierenden subtraktiven Grundfarben Cyan, Magenta und Gelb. Zusätzlich wurde, wie in der konventionellen Drucktechnik üblich, Schwarz als vierte Farbe aus mehreren Gründen hinzugenommen. Die einzelnen Farbbehälter sind in der Fig. 16 schematisch mit C, M, G, S bezeichnet. Bei Farben mit idealen Filtereigenschaften sollte nach den Gesetzen der Farbenlehre Schwarz entstehen, wenn

7

Cyan, Gelb und Magenta übereinander zuliegen kommen. Tatsächlich erreicht die Mischung der Farben nicht das gewünschte tiefe Schwarz, sondern im allgemeinen nur Dunkelgrau. Deshalb wird die Überlagerung der drei Grundfarben durch schwarze Tinte ersetzt. Darüber hinaus spart man Farbtinte und umgeht Probleme durch Verlaufen von großen Tintenmengen auf dem Papier. Ähnlich dem scharfen Luminanzbild (große Bandbreite) bei Fernsehen, erhöht Schwarz als vierte Farbe den Schärfeneindruck ("Zeichnung"). Auch lassen sich einige Farbtöne wie z. B. Grau oder Braun ohne Schwarz nur ungenügend realisieren.

Die vom Abtaster A abgetasteten Farbwerte durchlaufen eine Verstärkerstufe zur Einstellung der Helligkeitswerte V, in welcher die Offset und Verstärkungsfaktoren so eingestellt werden, daß sie in dem für die nachgeschaltete Analog/Digital-Wandlung erforderlichen Spannungsbereich liegen. Die vom Analog/Digital-Wandler A/D in 64 Stufen unterteilten Farbsignale gelangen schließlich zur Verarbeitungseinheit (Zentraleinheit CU). Die Verarbeitungseinheit CU hat drei Hauptaufgaben. Als erstes führt sie eine Korrektur der eingelesenen Werte durch. Diese Maßnahme ist nötig, um die vornehmlich im analogen Teil auftretenden Störungen und Driften auszugleichen. Der größte Störfaktor ist hierbei die durch die Beleuchtung der Vorlage verursachten Temperaturdrift.

Bei dieser Korrektur handelt es sich um eine 2-Punkt-Justierung. Am Ende jeder Zeile werden von einem schwarzen oder einem weißen Balken zwei Bezugswerte eingelesen. Der Bereich zwischen diesen zwei Referenzen wird nun in die vom Raster geforderte Anzahl von Helligkeitswerten unterteilt. Die Unterteilung bildet die Möglichkeit, die Nichtlinearität der Graukeile infolge von Punktüberlappungen zu kompensieren. Die hellen Stufen umfassen dabei mehr Helligkeitswerte als die dunklen. Zusätzlich ist es im Rahmen dieser Anordnung möglich, Hochlichter und Tiefen in der Kopie zu verstärken oder abzuschwächen.

Die zweite Aufgabe der Verarbeitungseinheit ist es, aus den Rot-, Grün- und Blauwerten (RGB-Werte) den Anteil der zu druckenden subtraktiven Grundfarben Cyan, Magenta und Gelb zu bestimmen. Eine direkte Zuordnung der Komplementärfarbenpaare Rot-Cyan, Grün-Magenta und Blau-Gelb bringt unbefriedigende Ergebnisse. Der Grund liegt darin, daß die Transmissionskurven der Farbfelder nicht den gewünschten Bandpaßcharakter aufweisen sondern sich überlappen. Daher müssen zur Bestimmung jeder Druckfarbe alle drei abgetasteten Helligkeitswerte herangezogen werden.

Eng verbunden mit der Farbrechnung ist die Bestimmung des Schwarzanteiles aus den RGB-Werten. Der Farbe Schwarz wird der kleinste (hellste) der berechneten Cyan-, Magenta- und Gelb-Werte zugewiesen.

Als dritte Hauptaufgabe muß die Verarbeitungseinheit die durch das Raster vorgesehene Schwellenwerte für jeden abdruckbaren Punkt zur Verfügung stellen. Danach führt sie den Vergleich mit den berechnenden Farbenwerten durch und bestimmt, ob ein Punkt zu setzen ist oder nicht.

Die Verarbeitungseinheit ist aus drei 8-Bit-Einplatinen-Computern AMC-SKC85(8085 Prozessor) aufgebaut. Die Aufteilung auf drei Rechner ist im Hinblick auf die verfügbare Rechenzeit günstig. Die Zeit für die Farbrechnung wird vermindert, indem für alle Kombinationen von Rot, Grün und Blau die korrigierten Werte von Cyan, Magenta und Gelb berechnet und in dreidimensionalen Matrizen abgelegt werden. Im Betrieb brauchen dann nur noch die entsprechenden Werte aus den Matrizen abgerufen werden. Je nach Bedarf läßt sich dabei der der Zentraleinheit CU zugeordnete Speicher beliebig erweitern. Weiterhin erfüllen die Rechner die Aufgabe von Schieberegistern für die abgetasteten Farbwerte eines Punktes, weil diese bedingt durch die Anordnung der Fotoelemente nacheinander aufgenommen werden, für die Korrektur aber gleichzeitig zur Disposition stehen müssen und zum anderen für die Druckbefehle, die über die Druckeransteuereinheit D dem Tintendruckkopf 4 zugeführt werden, und der den Abstand der Düsen am Druckkopf 4 zu kompensieren.

**Patentansprüche**

1. Verfahren zum Darstellen eines Halbtonbildes (Fig. 15), bei dem das aus Helligkeitsstufen gebildete Halbtonbild aus Bildpunkten gleicher Größe erzeugt wird, die auf vorgegebenen Rasterpositionen angeordnet sind, bei dem jeweils eine vorgegebene Anzahl von Rasterpositionen zu einem Bildfleck (Fig. 2) zusammengefaßt wird, und bei dem die Anzahl der Bildpunkte und ihre Rasterpositionen innerhalb eines Bildfleckes die jeweilige Helligkeitsstufen bestimmt,

dadurch gekennzeichnet, daß das Raster (Fig. 9, 12) der Bildpunkte der Bildflecke derart ausgestaltet ist, daß unter Zugrundelegung des Verlaufes einer ermittelten Detektionsgrenze zur Wahrnehmbarkeit von Sinus-Gittern im Amplituden-Ortsfrequenzbereich die Amplitude der einzelnen Komponenten des Ortsfrequenzspektrums sämtlicher Helligkeitsstufen des Rasters bei vorgegebenem Verschwimmabstand der Helligkeitsstufe mit nur einem Rasterpunkt pro Bildfleck die Detektionsgrenze (Fig. 1, 6) nicht überschreitet.

2. Verfahren nach Anspruch 1,
dadurch gekennzeichnet, daß die dem zweidimensionalen Raster der Bildpunkte eines Bildfleckes und damit einer Helligkeitsstufe entsprechende Signalfolge durch eine Recheneinheit mittels Fouriertransformation (Fig. 5) in eine dem Spektrum der Ortsfrequenz des Rasters entsprechende Signalfolge umgesetzt wird, und daß dann ein Vergleich der den Fourier-Komponenten entsprechenden Signale mit einer gespeicherten Detektionsgrenze (Fig. 1) erfolgt.

3. Verfahren nach Anspruch 2,
dadurch gekennzeichnet, daß zum Optimieren des Rasteraufbaues eines Bildfleckes in Abhängigkeit von dem Vergleichsvorgang eine Veränderung des Rasteraufbaues bis zur Unterschreitung der Detektionsgrenze erfolgt.

4. Verfahren nach einem der Ansprüche 1 bis 3,

dadurch gekennzeichnet, daß eine vorgegebene Anzahl von Rasterpositionen zu einer einem Bildfleck entsprechenden Matrix zusammengefaßt wird, deren Anzahl von Rasterpositionen der Anzahl der wiederzugebenden Helligkeitsstufen entspricht (Fig. 11).

5. Verfahren nach einem der Ansprüche 1 bis 4,

dadurch gekennzeichnet, daß der Bildfleck in mindestens drei gleichgroße Teilbildflecke (Fig. 11) zerlegt wird und daß dann in den so entstandenen gleichgroßen Teilbildflecken die Bildpunkte direkt benachbart als Bildpunkthaufen (Fig. 12) gesetzt werden.

6. Verfahren nach einem der Ansprüche 1 bis 5,

dadurch gekennzeichnet, daß zur Erzeugung eines hexagonal-ähnlichen Eindruckes bei der Verwendung von in quadratischen Matrizen angeordneten Rasterpositionen beim Aufbau der Bildflecken aufeinanderfolgende Ketten sich zueinander reihender Matrizen bzw. Teilmatrizen um eine halbe Seitelänge der Matrizen bzw. Teilmatrizen gegeneinander verschoben sind (Fig. 13, 14).

7. Verfahren nach einem der Ansprüche 1 bis 5,

dadurch gekennzeichnet, daß bei der Verwendung von in hexagonalen Matrizen angeordneten Rasterpositionen beim Aufbau der Bildflecken sich die drei Richtungen, in denen sich die entstehenden Teilmatrizen der Teilbildflecken einanderreihen, von den drei Richtungen unterscheiden, in denen sich die Matrizen der Bildflecken aneinanderreihen, so daß möglichst viele verschiedene Verzugsrichtungen entstehen (Fig. 12).

8. Verfahren nach einem der Ansprüche 5, 6 oder 7,

dadurch gekennzeichnet, daß Bildpunkte zur Erzeugung aufeinanderfolgender Helligkeitsstufen in einem vorgegebenen Schema z. B. reihum in verschiedenen Teilmatrizen gesetzt werden (Fig. 12).

9. Verfahren nach einem der Ansprüche 1 bis 8,

dadurch gekennzeichnet, daß es sich bei dem darzustellenden Halbtonbild um ein farbiges Halbtonbild handelt.

## Claims

1. A method of representing a half-tone image (Figure 15) in which the half-tone image, which consists of intensity stages, is produced from image points of equal size arranged at predetermined raster positions, wherein a respective predetermined number of raster positions is assembled to form an image spot (Figure 2), and wherein the number of image points and their raster positions within an image spot determines the respective intensity stages, characterised in that the raster (Figures 9, 12) of the image points of the image spot is contrived to be such that, on the basis of the curve of a determined detection threshold for the perceptibility of sine grids in the locus or spatial frequency versus amplitude range, the amplitude of the individual components of the locus or spatial frequency spectrum of all the intensity stages of the raster, with a predetermined blurring interval of the intensity stage with only one raster point per image spot, does not exceed the detection threshold (Figures 1, 6).

2. A method as claimed in Claim 1, characterised in that the signal sequence which corresponds to the two-dimensional raster of the image points of an image spot, and thus to a brightness step, is converted in a computer unit by means of a Fourier transformation (Figure 5), into a signal sequence which corresponds to the spectrum of the locus or spatial frequency of the raster, and that then a comparison is carried out between the signals which correspond to the Fourier components and a stored detection threshold (Figure 1).

3. A method as claimed in Claim 2, characterised in that in order to optimise the raster construction of an image spot in dependence upon the comparison procedure, the raster construction is changed until the detection threshold is undershot.

4. A method as claimed in one of Claims 1 to 3, characterised in that a predetermined number of raster positions are combined to form a matrix which corresponds to an image spot, and whose number of raster positions corresponds to the number of brightness steps which are to be reproduced (Figure 11).

5. A method as claimed in one of Claims 1 to 4, characterised in that the image spot is divided into at least three subsidiary image spots of equal size (Figure 11), and that then, in the subsidiary image spots of equal size which have been formed in this way, the image points are set directly adjacently as image point bunches (Figure 12).

6. A method as claimed in one of Claims 1 to 5, characterised in that in order to produce a hexagonal-like impression when raster positions arranged in square matrices are used for the construction of the image spots, consecutive chains of successive matrices and sub-matrices are mutually-offset by a half a side length of the matrices and sub-matrices (Figures 13, 14).

7. A method as claimed in one of Claims 1 to 5, characterised in that when raster positions arranged in hexagonal matrices are used for the construction of the image spots, the three directions in which the occurring sub-matrices of the subsidiary image spots are consecutively arranged, differ from the three directions in which the matrices of the image spots are consecutively arranged, so that as many as possible different preferred directions are formed (Figure 12).

**0 178 547**

8. A method as claimed in one of Claims 5, 6 or 7, <u>characterised in that</u> image points for the formation of consecutive brightness steps are set in a predetermined plane, e.g. in turn in different sub-matrices (Figure 12).

9. A method as claimed in one of Claims 1 to 8, <u>characterised in that</u> the half-tone image which is to be reproduced is a coloured half-tone image.

## Revendications

1. Procédé pour représenter une image en demi-teinte (figure 15), selon lequel cette image formée par des échelons de luminosité, est obtenue à partir de points d'image de même taille, qui sont situés dans des positions prédéterminées d'une trame, et selon lequel respectivement un nombre prédéterminé de positions de la trame sont rassemblées pour former un spot de l'image (figure 2), et selon lequel le nombre de points d'image et leurs positions dans la trame à l'intérieur d'un spot de l'image, déterminent l'échelon respectif de luminosité, caractérisé par le fait que la trame (figures 9, 12) des points d'image des spots de l'image est agencée de telle sorte que, en prenant pour base la variation d'une limite déterminée de dédétection pour la détection de réseaux en sinus dans la gamme des fréquences de lieu des amplitudes, l'amplitude des différentes composantes du spectre des fréquences de lieu de tous les échelons de luminosité de la trame ne dépasse pas la limite de détection (figures 1, 6) dans le cas d'une distance prédéterminée d'apparition d'un flou, de l'échelon de luminosité avec seulement un point de trame pour chaque spot de l'image.

2. Procédé suivant la revendication 1, caractérisé par le fait que la suite de signaux, qui correspond à la trame bidimensionnelle des points d'images d'un spot de l'image et par conséquent à un échelon de luminosité, est convertie par une unité de calcul, au moyen d'une transformation de Fourier (figure 5), en une suite de signaux correspondant au spectre de la fréquence de lieu de la trame, et qu'une comparaison est ensuite effectuée entre les signaux correspondant aux composantes de Fourier et une limite de détection mémorisée (figure 1).

3. Procédé suivant la revendication 2, caractérisé par le fait que pour optimiser la structure de la trame d'un spot de l'image, une modification de la structure de la trame est effectuée en fonction de l'opération de comparaison, jusqu'à ce que l'on tombe au-dessous de la limite de détection.

4. Procédé suivant l'une des revendications 1 à 3, caractérisé par le fait qu'un nombre prédéterminé de positions dans la trame sont rassemblés pour former une matrice qui correspond à un spot de l'image et dont le nombre des positions dans la trame correspond au nombre des échelons de luminosité devant être reproduits (figure 11).

5. Procédé suivant l'une des revendications 1 à 4, caractérisé par le fait qu'on subdivise le spot de l'image en au moins trois spots partiels de même taille (figure 11) et qu'ensuite on insère, dans les spots partiels de même taille de l'image, ainsi obtenus, les points d'image directement au voisinage les uns des autres, sous la forme d'accumulations de points d'image (figure 12).

6. Procédé suivant l'une des revendications 1 à 5, caractérisé par le fait que pour obtenir une impression ressemblant à une forme hexagonale, dans le cas de l'utilisation de positions de trame situées dans des matrices carrées, lors de la formation des spots de l'image on déplace les unes par rapport aux autres des chaînes successives de matrices ou de matrices partielles se succédant en série, de la moitié de la longueur d'un côté de ces matrices ou matrices partielles (figures 13, 14).

7. Procédé suivant l'une des revendications 1 à 5, caractérisé par le fait que, dans le cas de l'utilisation de positions de trame situées dans les matrices hexagonales, lors de la formation des spots de d'image les trois directions dans lesquelles les matrices partielles obtenues des spots partiels de d'image se succèdent, diffèrent des trois directions, dans lesquelles ces matrices des spots de l'image se succèdent, de sorte que l'on obtient un nombre aussi grand que possible de directions préférentielles (figure 12).

8. Procédé suivant l'une des revendications 5, 6 ou 7, caractérisé par le fait qu'en vue d'obtenir des échelons successifs de luminosité, on dispose des points d'image selon un schéma prédéterminé, par exemple en les disposant alentour dans différentes matrices partielles (figure 12).

9. Procédé suivant l'une des rvendications 1 à 8, caractérisé par le fait que, pour ce qui concerne l'image en demi-teinte devant être représentée, il s'agit d'une image en demi-teinte en couleurs.

# FIG 1

# FIG 5

0178 547

Schwellenwerte

| 1 | 9 | 3 | 11 |
| 13 | 5 | 15 | 7 |
| 4 | 12 | 2 | 10 |
| 16 | 8 | 14 | 6 |

Stufe 1  Stufe 2  Stufe 3  Stufe 4  Stufe 5

FIG 2

| 13 | 5 | 10 | 15 |
| 11 | 1 | 3 | 8 |
| 7 | 4 | 2 | 12 |
| 16 | 9 | 6 | 14 |

FIG 3

| | 5 | 16 | 4 | |
| 13 | 2 | 12 | 17 |
| 7 | 8 | 18 | 6 | 10 |
| 1 | 9 | 3 | 14 |
| 15 | 11 | 19 | |

FIG 4

## FIG 6

## FIG 7

hexagonale Raster

## FIG 8

quadratische Raster

# FIG 9

Stufe 1    Stufe 2    Stufe 3    Stufe 4

Stufe 5    Stufe 6    Stufe 7    Stufe 8

# FIG 10

A

0,2

0,1

0,05

0,02

0,01

0,005

Detektionsgrenze

$\omega_0$    $2\omega_0$    f

## FIG 11

Teilbildfleck

Bildfleck

| | | | 5 | 8 | |
|---|---|---|---|---|---|
| 4 | 7 | 20 | 2 | 11 |
| 19 | 1 | 10 | 17 | 14 |
| 16 | 13 | 6 | 9 | |
| | 21 | 3 | 12 | |
| | 18 | 15 | | |

## FIG 12

Stufe 1    Stufe 2    Stufe 3    Stufe 4

Stufe 5    Stufe 6    Stufe 7    Stufe 8

## FIG 13

Bildflecke

## FIG 14

Bildflecke

Teilbildflecke

# FIG 15

# FIG 16

# FIG 17